# EUROPEAN PATENT APPLICATION

(11) **EP 4 411 352 A1**
(43) Date of publication of application: **07.08.2024**
(21) Application number: 23218502.5
(22) Date of filing: 20.12.2023
(51) Int. Cl.: G01N 21/952, G01N 21/958, G01N 21/88, G01N 21/95, G01N 21/94

(54) **APPARATUS FOR DETECTING SURFACE DEFECTS IN OBJECTS**

(30) Priority: 31.01.2023 IT 202300001419
(71) Applicant: UTPVision S.r.l., 24061 Albano Sant'Alessandro (BG) (IT)
(72) Inventor: Finazzi, Roberto, I-24060 Bolgare (BG) (IT); Sigala, Sergio, I-25035 Ospitaletto (BS) (IT)
(74) Representative: De Bortoli, Eros

(57) **Abstract**

Apparatus for detecting surface defects in objects comprising illuminating means configured to emit at least a light radiation and illuminate an object to be inspected. The detection apparatus according to the invention comprises a measuring device of the light radiation received by said object.

According to an aspect of the invention, the detection apparatus also comprises image acquisition means configured to acquire one or more images of said object, when illuminated by said illuminating means, and data processing means configured to process the images acquired by said image acquisition means and provide detection data indicative of the presence of surface defects on said object.

## Description

### Technical field

The present invention relates to an apparatus for detecting surface defects in objects, for example in industrial seals. In particular, the present invention relates to a detection apparatus that incorporates a measuring device capable of measuring, in real time, the amount of light received by the object inspected.

### Background art

As is known, some components widely used in industry, for example industrial seals of toroidal type (O-rings), must be subjected to careful analysis to identify the presence of defects that could impair their functionality.

In general, at an industrial level, surface inspection of these components is carried out automatically, using dedicated equipment.

An apparatus for detecting surface defects typically comprises a pair of illuminating devices arranged on opposite sides of a transparent support on which the object to be inspected is placed. In this way, the object to be inspected can be illuminated, simultaneously or alternately, with light radiation coming from different directions and having different wavelengths.

The detection apparatus further comprises a video camera or other filming means for acquiring one or more images of the object to be inspected, when illuminated by the illuminating means.

An example of apparatus for detecting surface defects in seals of O-Ring type is described in the patent application EP2280270A1.

Experience has shown how, during the service life of an apparatus for detecting surface defects in an object, the light radiation, with which the object to be inspected is illuminated, is often subject to a certain decrease in intensity that can reach levels that compromise the process for detecting possible surface defects.

This phenomenon can be due to many causes, for example deterioration of the light sources (for example LEDs) used in the illuminating devices, progressive opacification of surfaces through which the light radiation passes before reaching the object to be inspected, accumulation of dirt on the aforesaid surfaces, and so forth.

To overcome this problem, it is common practice to periodically measure the intensity of the light radiation emitted by the illuminating devices of the apparatus using a suitable portable testing device.

However, this has some inherent limitations of an operational nature mostly linked to the sporadicity of the measurements carried out. In practice, an excessive decrease in the light radiation may be detected with a certain delay with respect to when this problem actually started. This circumstance makes it impossible to ensure that the quality of the inspection activity carried out by the detection apparatus remains consistent over time.

On the other hand, testing the light radiation at relatively short intervals of time (e.g., every hour) would cause unacceptable lengthening of the inspection times and significant increases in labor, given that these tests require the operator to take direct action on the operating field of the machine.

Some prior art detection apparatus include light sensors integrated in the illuminating devices used, at the level of the light sources included in these devices. Although these solutions allow the detection of any phenomena of deterioration of the aforesaid light sources, they to not detect decreases in the intensity of the light radiation linked to opacification or soiling of the surfaces through which the optical path of the light radiation passes.

### Summary

The main aim of the present invention is to provide an apparatus for detecting surface defects in an object that overcomes or mitigates the problems of the prior art set forth above.

Within this aim, an object of the present invention is to provide a detection apparatus which ensures high accuracy, consistent over time, of the inspection activities carried out. A further object of the present invention is to provide a detection apparatus that has relatively low overall operating costs with respect to prior art systems of the same type. A further object of the present invention is to provide a detection apparatus that is easy to produce or implement at an industrial level, at competitive costs with respect to prior art systems of the same type.

This aim and these objects, together with other objects that will be apparent from the description below and from the accompanying drawings, are implemented, according to the invention, by a device for detecting surface defects in an object according to claim 1 and the claims dependent thereon, set forth below.

Preferably, said object is an industrial seal of "O-ring" type.

In a general definition thereof, the detection apparatus according to the invention comprises illuminating means configured to emit at least a light radiation along an optical axis and illuminate said object.

According to an aspect of the invention, the detection apparatus also comprises image acquisition means configured to acquire one or more images of said object, when illuminated by said illuminating means, and data processing means configured to process the images acquired by said image acquisition means and provide detection data indicative of the presence of surface defects on said object.

According to the invention, the detection apparatus comprises a measuring device of the light radiation received by said object.

The measuring device comprises at least a platelike body arranged to intersect the optical axis of the illuminating means and receive the light radiation with which said illuminating means illuminate said object. This platelike body comprises a plate of optically active material capable of deflecting, along an extension plane of said plate and toward the edge of said plate, a predetermined portion of the light radiation received from said illuminating means.

The measuring device comprises at least a light sensor optically coupled to said at least a platelike body and configured to receive the portion of light radiation deflected by said plate of optically active material and provide detection signals indicative of the light intensity of the light radiation so received.

Preferably, said at least a light sensor is arranged at the edge of the plate of optically active material of each platelike body.

Preferably, said at least a platelike body is arrange so that the extension plane of said plate of optically active material is orthogonal to the optical axis of the illuminating means. Preferably, the plate of optically active material of said at least a platelike body is made of PMMA comprising colorless diffusive impurities.

According to some embodiments of the invention, said at least a light sensor is configured to receive a monochromatic light radiation.

According to other embodiments of the invention, said at least a light sensor is configured to receive a polychromatic light radiation.

According to some embodiments of the invention, the measuring device comprises a single light sensor optically coupled to each platelike body.

According to other embodiments of the invention, the measuring device comprises a plurality of light sensors optically coupled to each platelike body.

According to some embodiments of the invention, the measuring device comprises a platelike body arranged at an intermediate position between an illuminating device of said illuminating means and a first surface of a support at which said object is placed. According to other embodiments of the invention, the measuring device comprises a platelike body arranged at an intermediate position between an illuminating device of said illuminating means and a second surface of a support of said object. In this case, the object is placed at a first surface of said support opposite said second surface and the support is made of optically transparent material.

According to an aspect of the invention, the measuring device comprises an electronic signal processing unit operatively coupled to said at least a light sensor. The aforesaid electronic signal processing unit is configured to receive and process the detection signals provided by said at least a sensor and provide measurement signals indicative of the light radiation received by said object.

In a further aspect thereof, the invention concerns an object inspection station comprising at least a detection apparatus as defined above.

### Brief description of the drawings

Further features and advantages of the present invention will be more apparent from the detail description of preferred embodiments thereof, provided below by way of nonlimiting example, with reference to the accompanying drawings, wherein:
- Fig. 1 illustrates a block diagram of the detection apparatus according to the invention;
- Figs. 2A, 2B schematically illustrate some variants of embodiment of the detection apparatus according to the invention;
- Fig. 3 illustrates a measuring device used in the detection apparatus according to the invention; and
- Figs. 4-7 schematically illustrate further variants of embodiment of the detection apparatus according to the invention.

### Detailed description

With reference to the cited figures, the present invention relates to a detection apparatus 1 capable of identifying surface defects in objects. In general, the detection apparatus 1 is configured to provide detection data DS indicative of the presence of surface defects in each object 100 inspected. These detection data can be used for various purposes, for example for quality control or similar purposes.

The detection apparatus 1 is particularly suitable for detecting surface defects in industrial seals, in particular in "O-ring" type seals. Therefore, hereinafter it will be described with particular reference to this field of application, without wishing to limit the scope of the present invention.

In fact, the detection apparatus 1 can be used to detect surface defects in objects of any type, for example in any type of industrial component of relatively small size (generally on a millimetric scale). In principle, the surface defects detectable by means of the detection apparatus can be of any type. For example, they can consist of micro-scratches, variations in surface roughness, variations in color, micro-cracks, micro-crevices, and so forth.

During operation of the detection apparatus, the object 100 to be inspected is advantageously laid on a support 150 preferably having a planar structure. Preferably, this support is movable with respect to the detection apparatus. For example, the support 150 can consist of a rotary table or a conveyor belt.

According to the invention, the detection apparatus 1 comprises illuminating means 2 configured to illuminate the object 100 to be inspected.

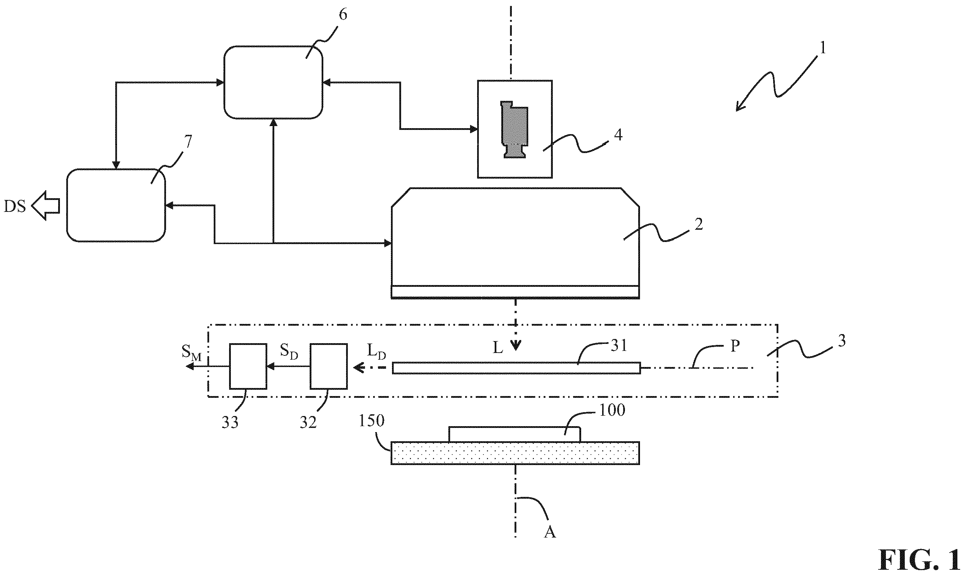

In general, the aforesaid illuminating means are arranged to emit a light radiation L along at least an optical axis A and illuminate the object 100 to be inspected (Fig. 1).

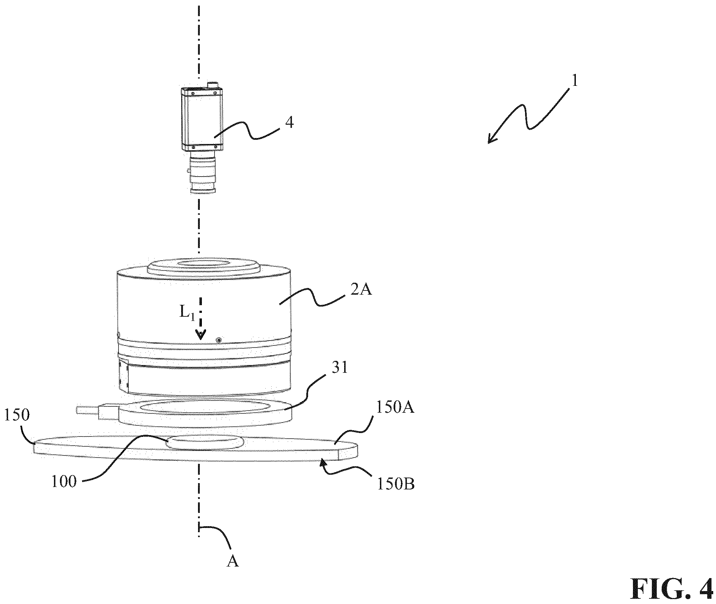

The illuminating means of the detection apparatus can advantageously comprise one or more illuminating devices 2A, 2B (Figs. 4-7). Each illuminating device is configured to emit a corresponding light radiation L₁, L₂ along an optical axis A (which can be different for each illuminating device or coincident as illustrated in the cited figures) according to a corresponding predefined direction. Preferably, each illuminating device 2A, 2B comprises one or more corresponding light sources.

Preferably, each light source consists of an assembly of LED (Light Emitting Diode) devices, for example RGBY LED devices, capable of emitting the desired light radiation. The light radiation L₁, L₂ emitted by each illuminating device 2A, 2B can be monochromatic or polychromatic, according to requirements.

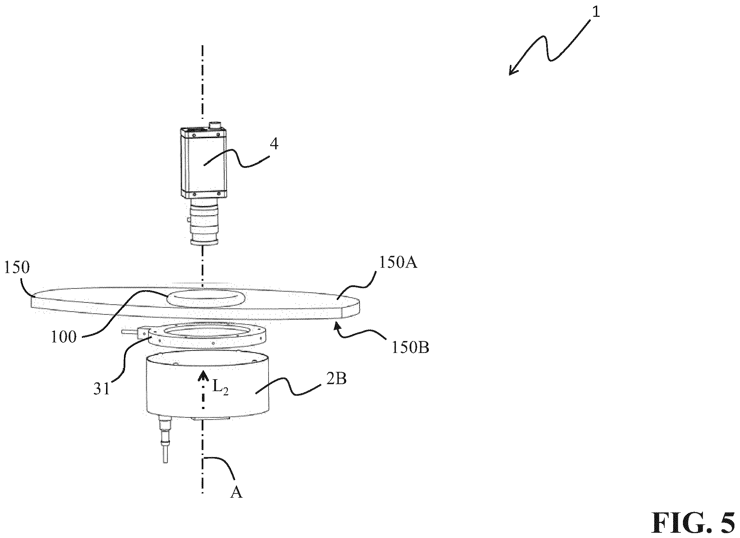

Figs. 4 and 5 show embodiments of the invention in which the illuminating means 2 comprise a single illuminating device 2A or 2B arranged on a corresponding side of the support 150 of the object 100 to be inspected.

In the embodiment of Fig. 4, the illuminating device 2A faces a first surface 150A of the support 150 at which the object 100 to be inspected is placed. As can be noted, the illuminating device 2A emits a light radiation L₁ directed along the optical axis A, in the direction of the first surface 150A of the support 150, to illuminate the object 100 to be inspected.

In the embodiment of Fig. 5, the illuminating device 2B faces a second surface 150B of the support 150 opposite the first surface 150A, at which the object 100 to be inspected is placed. As can be noted, the illuminating device 2B emits a light radiation L₂ directed along the optical axis A, in the direction of the second surface 150B of the support 150 (hence in the opposite direction to the direction of the light radiation L₁ emitted by the illuminating device 2A in the embodiment of Fig. 4). In the embodiment of Fig. 5, the support 150 is advantageously made of optically transparent material in order to allow the illuminating device 2B to illuminate the object 100 to be inspected.

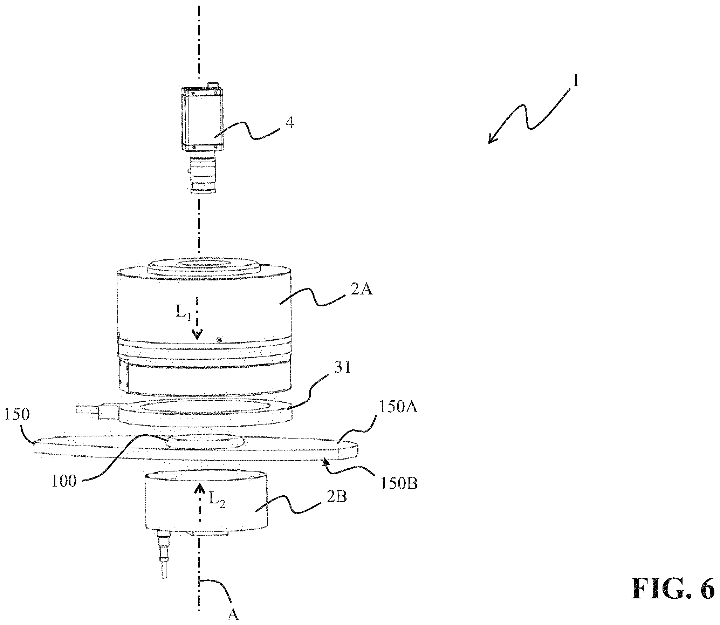

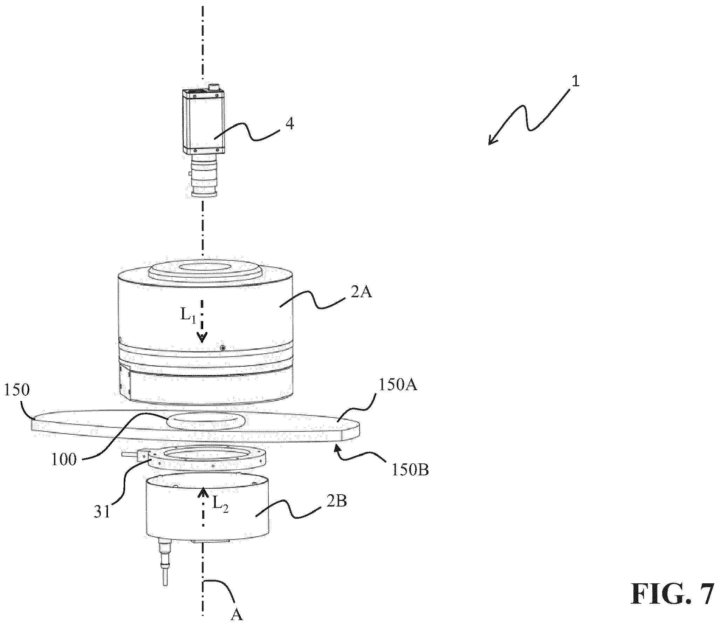

Figs. 6 and 7 show embodiments of the invention in which the illuminating means 2 comprise a pair of illuminating devices 2A, 2B arranged on opposite sides of the support 150 of the object 100 to be inspected.

The illuminating devices 2A, 2B emit light radiations L₁, L₂ along a same optical axis A but oriented according to opposite directions (in practice, each toward a corresponding surface 150A, 150B of the support 150).

In this embodiment of the invention, the support 150 is advantageously made of optically transparent material to allow the illuminating devices 2A, 2B to illuminate the object 100 to be inspected at opposite sides. Naturally, the wavelengths of the light radiations L₁, L₂ emitted by the illuminating devices can be coincident or different to each other, according to requirements.

In a practical embodiment of the invention, the illuminating means 2 can be fixed to a suitable supporting structure (not illustrated).

In general, the illuminating means 2 can be produced at an industrial level according to known solutions and therefore, for brevity, they will be described below only with reference to the aspects of interest for the invention.

According to an aspect of the invention, the detection apparatus 1 comprises image acquisition means 4 configured to acquire at least an image of the object 100, when illuminated by the illuminating means 2.

Preferably, the image acquisition means 4 are arranged coaxially with the illuminating means 2, along the same optical axis A.

According to some embodiments of the invention, the acquisition means 4 are configured to acquire one or more black and white (B/N) images of the object 100, when it is illuminated by the illuminating means 2 illustrated above.

In this case, the image acquisition means 4 can advantageously comprise at least an image sensor (not illustrated) formed by an array of pixels, for example an array of 2452x2056 pixels or 1600x1200 pixels. Optionally, the image acquisition means 4 can comprise a filter of the light radiation (not illustrated) operatively associated with the aforesaid image sensor to filter the light incident thereon and suitable electronic interface circuits (not illustrated) operatively associated with the image sensor to manage the information acquired thereby.

According to other embodiments of the invention, the acquisition means 4 are configured to acquire one or more color images of the object 100, when the latter is illuminated by the illuminating means 2 illustrated above.

In this case, the image acquisition means 4 can advantageously comprise at least a color video camera, optionally operatively associated with a suitable Bayer filter.

In a practical embodiment of the invention, the image acquisition means 4 can also be fixed to a suitable supporting structure (not illustrated), for example the same supporting structure destined to support the illuminating means 2.

In general, the image acquisition means 4 can be produced at an industrial level according to known solutions and therefore, for brevity, they will be described below only with reference to the aspects of interest for the invention.

According to an aspect of the invention, the detection apparatus 1 comprises data processing means 7 configured to process one or more images relating to an object 100 inspected, acquired by the image acquisition means 4, and provide detection data DS indicative of the presence of surface defects in the object 100 inspected.

To process the images provided by the image acquisition means 4, the data processing means 7 can advantageously implement suitable image processing or recognition algorithms of known type.

According to an aspect of the invention, the detection apparatus 1 comprises control means 6 configured to interact with some components of the detection apparatus (in particular with the illuminating means 2, the acquisition means 4 and the data processing means 7) to control the operation thereof through the exchange of suitable data signals and control signals.

For example, the control means 6 can be configured to control the assemblies of LED devices of the illuminating devices 2A, 2B to obtain the best emission spectrum as a function of the color of the object 100 to be inspected. In an industrial embodiment of the invention, the data processing means 7 and the control means 6 can comprise one or more devices for digital processing of the data, for example one or more microprocessors capable of executing software instructions stored on a storage medium.

In general, the data processing means 7 and the control means 6 can be produced according to known circuit solutions. For example, the detection apparatus 1 could comprise a control and processing unit provided with one or more microprocessor cards suitably arranged to carry out the functions required for the processing means 7 and the control means 6.

According to the invention, the detection device 1 comprises at least a measuring device 3 of the light radiation received by the object 100 to be inspected.

In general, the measuring device 3 is configured to provide measurement signals S_{M} indicative of the intensity of the light radiation received by the object 100 to be inspected. The measurement signals S_{M} provided by the measuring device 3 can be used for various purposes.

For example, they can be supplied to the aforesaid control and processing unit of the detection apparatus to make measurement data available at a user interface or to provide suitable alarm signals, if the measurement signals S_{M} are indicative of a light radiation having an intensity below a given threshold.

According to a further example, the measurement signals S_{M} can be provided as feedback to the control means 6 so that the latter are capable of regulating operation of the light sources of the illuminating means 2 as a function of the light radiation actually received by the object 100 to be inspected.

According to a further example, the measurement signals S_{M} can be provided as feedback to the data processing means 7 so that the latter are capable of processing the images of the object 100 inspected, provided by the image acquisition means 4, based on the actual lighting conditions of said object.

According to the invention, the measuring device 3 comprises at least a platelike body 31 arranged to intersect the optical axis A of the illuminating means 2 and receive the light radiation L, L₁, L₂ with which the latter illuminate the object 100 to be inspected.

Each platelike body 31 comprises a plate 311 of optically active material, i.e., capable of interacting with the light radiation received from the illuminating means.

Preferably, each platelike body 31 is arranged so that the plate 311 of optically active material is arranged coaxially with the optical axis A of the illuminating means so as to have opposite surfaces through which the light radiation emitted by the latter passes. Preferably, each platelike body 31 is arranged so that the extension plane P of the plate 311 of optically active material is perpendicular to the optical axis A of the illuminating means.

In principle, the plate 311 of optically active material can have any shape, for example circular, as illustrated in the cited figures.

Preferably, the platelike body 31 is arranged so as to receive the light radiation emitted by the illuminating means 2 in proximity of the object 100 to be inspected, when this object is placed on the related support 150.

Fig. 4 shows an embodiment of the invention in which the measuring device 3 comprises a platelike body 31 operatively associated with the single illuminating device 2A of the apparatus. In this case, the platelike body 31 is arranged in an intermediate position between an illuminating device 2A and the first surface 150A of the support 150, at which the object 100 is placed.

Fig. 5 also shows an embodiment of the invention in which a platelike body 31 is operatively associated with the single illuminating device 2B of the apparatus. In this case, the platelike body 31 is arranged in an intermediate position between an illuminating device 2B and a second surface 150B of the support 150. The latter is a surface of the support 150 in a position opposite a first surface 150A at which the object 100 is placed.

Fig. 6 shows an embodiment of the invention in which a single platelike body 31 is operatively associated with a pair of illuminating devices 2A, 2B of the apparatus. In this case, the platelike body 31 is arranged in an intermediate position between the illuminating device 2A, positioned above the support 150, and a first surface 150A of said support, at which the object 100 is placed.

Fig. 7 shows another embodiment of the invention in which a single platelike body 31 is operatively associated with a pair of illuminating devices 2A, 2B of the apparatus. In this case, the platelike body 31 is arranged in an intermediate position between the illuminating device 2B, positioned below the support 150, and a second surface 150B of said support, in a position opposite a first surface 150A, at which the object 100 is placed.

As mentioned above, in these embodiments of the invention, the detection device 1 comprises a single platelike body 31 placed in proximity of the support 150 at which the object 100 to be inspected is placed. In any case, other embodiments of the invention (not illustrated) are also possible, in which the measuring device 3 comprises several platelike bodies 31, each of which is operatively associated with a corresponding illuminating device, according to methods very similar to those illustrated by Figs. 6-7.

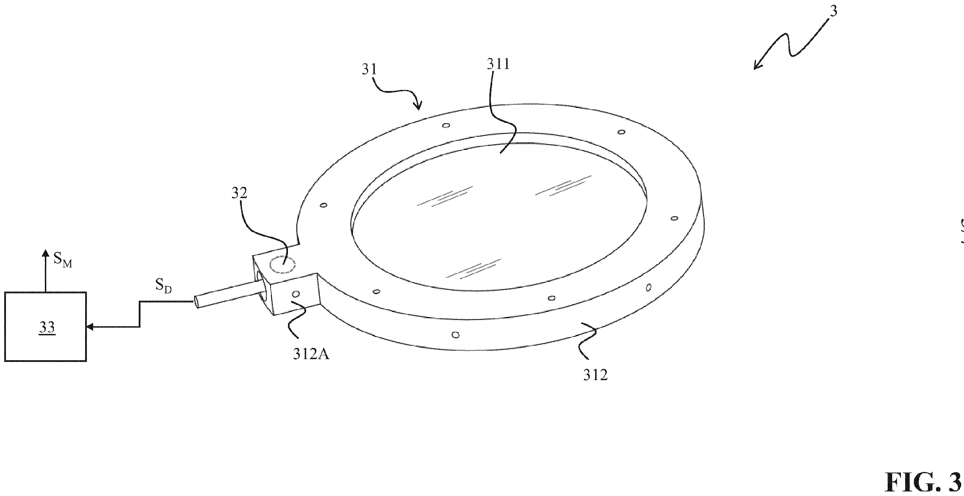

Preferably, each platelike body 31 comprises a frame 312 mechanically coupled according to known methods to the plate 311 of optically active material. The frame 312 is advantageously arranged to support the plate 311 of optically active material and fix it to a suitable supporting structure (not illustrated), for example the same supporting structure destined to support the illuminating means 2 and the image acquisition means 4 (Fig. 3).

According to the invention, the plate 311 of optically active material is capable of deflecting, along its extension plane P and toward a perimeter edge thereof, a predetermined portion L_{D} of the light radiation received from the illuminating means. Preferably, the plate 311 of optically active material is capable of deflecting a part of the light radiation received according to an appropriate direction radial with respect to the optical axis A.

Preferably, the plate 311 of optically active material is made of PMMA (preferably Plexiglas^{™} Endlighten, for example of the type described in the European patent application EP15711837.3) in which an effective amount of colorless diffusive impurities is dispersed. These impurities dispersed in the PMMA are capable of forming a number of reflection planes inside the plate 311, which are capable of deflecting, toward the edge of said plate, the optical path of a part of the light radiation received at a surface exposed to the light radiation.

According to the invention, the measuring device 3 comprises one or more light sensors 32 optically coupled to each platelike body 31, more in particular to the plate 311 of optically active material of each platelike body (Figs. 1-3). Each light sensor 32 is configured to receive the portion L_{D} of light radiation emitted by the illuminating means 2 and deflected by the plate 311 and provide detection signals S_{D} indicative of the light intensity of the light radiation received.

According to some embodiments of the invention, each light sensor 32 is configured to receive a monochromatic light radiation L_{D}. In this case, each light sensor can advantageously comprise a photodiode optically coupled to a perimeter edge of the plate 311 according to known methods and electrically connected to a suitable signal processing circuit network.

According to some embodiments of the invention, each light sensor 32 is configured to receive a polychromatic light radiation L_{D}. In this case, each light sensor can advantageously comprise an array of photodiodes optically coupled to a perimeter edge of the plate 311 according to known methods and electrically connected to a suitable signal processing circuit network.

Preferably, each light sensor 32 is arranged at a perimeter edge of the respective plate 311 so as to be optically coupled thereto.

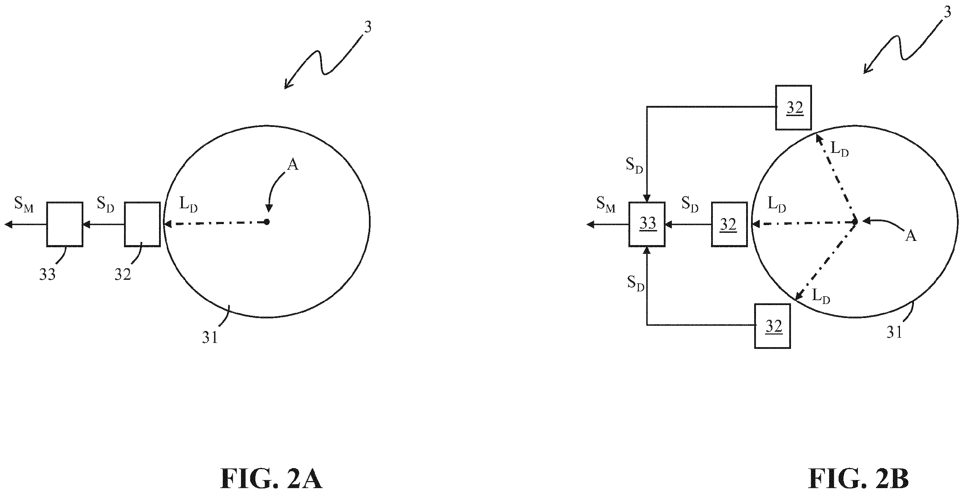

According to some embodiments of the invention (Figs. 2A, 3), the measuring device 3 comprises a single light sensor 32 coupled to each platelike body 31. This light sensor 32 is optically coupled to a perimeter edge of the plate 311 in radial position with respect to the optical axis A.

According to the embodiment of Fig. 3, the light sensor 32 is advantageously housed in a seat 312A formed in the frame 312 of the platelike body.

According to other embodiments of the invention (Fig. 2B), the measuring device 3 comprises a plurality of light sensors 32 coupled to each platelike body 31. Each light sensor is optically coupled to a perimeter edge of the plate 311 in a corresponding radial position with respect to the optical axis A. Also in this case, each light sensor can advantageously be housed in a corresponding seat of the frame of the platelike body. According to an aspect of the invention, the measuring device 3 comprises at least an electronic signal processing unit 33 operatively coupled to the aforesaid one or more light sensors 32.

Each electronic unit 33 is configured to receive and process the detection signals S_{D} provided by one or more light sensors 32 and provide measurement signals S_{M} indicative of the intensity of the light radiation received by the object 100.

Preferably, the measuring device 3 comprises a single electronic unit 33 operatively coupled to each light sensor 32, also when this measuring device comprises several platelike bodies 31.

However, embodiments of the invention in which the measuring device 3 comprises an electronic unit 33 for each platelike body 31 are also possible.

Preferably, each electronic unit 33 can comprise one or more circuit boards, for example a microprocessor, appropriately arranged to perform the aforesaid functions.

In a practical implementation of the invention, each electronic unit 33 can be integrated in the above-mentioned control and processing unit of the detection apparatus 1, together with the processing means 7 and with the control means 6.

The detection apparatus according to the invention has significant advantages with respect to the prior art.

The measuring device 3 illustrated above allows indirect measurement of the light radiation received by the object 100 to be inspected.

By exploiting the properties of the optically active material of the plate 311 of each platelike body, the measuring device 3 is capable of measuring the light intensity of a predetermined portion L_{D} of the light radiation with which the object 100 to be inspected is illuminated by the illuminating means. In this way, the measuring device 3 can easily calculate measurement data S_{M} indicative of the intensity of the total light radiation received by the object 100 to be inspected.

Unlike the prior art solutions, with the measuring device 3 it is possible to detect, in real time, i.e., without time delays linked to the periodic nature of the tests carried out, any decrease in the intensity of the light radiation that reaches the objects to be inspected. Naturally, this circumstance makes it possible to act promptly with the most appropriate maintenance operations, as soon as a problem of illumination of the objects to be inspected is detected.

The measuring device 3 measures the intensity of the light radiation in an area close to the object 100 to be inspected. Unlike other prior art solutions, which merely measure the intensity of the light radiation as emitted from the light sources of the illuminating means, with the measuring device 3 it is possible to detect a decrease in the light intensity linked to opacification or soiling of surfaces through which the optical path of the light radiation emitted by the illuminating means passes.

Due to the presence of the measuring device 3, the detection apparatus according to the invention is thus capable of ensuring a high level of accuracy, consistent over time, of the inspection activities carried out and relatively low overall operating costs with respect to prior art systems of the same type. Measurement of the light intensity that illuminates the objects to be inspected can advantageously be carried out automatically, without the intervention of an operator. The detection apparatus according to the invention has a particularly compact structure which makes it easy to integrate in an object inspection station, in particular in a station for inspecting industrial seals of O-ring type.

The detection apparatus according to the invention can be easily produced at an industrial level at costs competitive with the prior art solutions available.

## Claims

1. Apparatus (1) for detecting surface defects in objects, said apparatus comprising illumination means (2, 2A, 2B) configured to emit at least a light radiation (L, L1, L2) along at least an optical axis (A) and illuminate an object (100) to be inspected, **characterized in that** it comprises a measuring device (3) of the light radiation received by said object (100), said measuring device comprising at least a platelike body (31) arranged to intersect said optical axis (A) and receive the light radiation (L, L1, L2) with which said illuminating means (2, 2A, 2B) illuminate said object, said platelike body comprising a plate (311) of optically active material capable of deflecting, along an extension plane (P) of said plate (311), a predetermined portion (L_{D}) of the light radiation received from said illumination means (2, 2A, 2B), said measuring device comprising at least a light sensor (32) optically coupled to said at least a platelike body (31) and configured to receive the portion (L_{D}) of light radiation deflected by said plate (311) and provide detection signals (S_{D}) indicative of the light intensity of the light radiation so received.

2. Apparatus according to claim 1, **characterized in that** said plate (31) of optically active material is made of PMMA comprising colorless diffusive impurities.

3. Apparatus according to any of the preceding claims, **characterized in that** said at least a platelike body (31) is arranged so that the extension plane (P) of said plate (311) of optically active material is orthogonal to said optical axis (A).

4. Apparatus according to any of the preceding claims, **characterized in that** said at least a light sensor (32) is configured to receive a monochromatic light radiation (L_{D}).

5. Apparatus according to any one of the claims from 1 to 3, **characterized in that** said at least a light sensor (32) is configured to receive a polychromatic light radiation (L_{D}).

6. Apparatus according to any one of the preceding claims, **characterized in that** said measuring device (3) comprises a single light sensor (32) optically coupled to each platelike body (31).

7. Apparatus according to any one of claims 1 to 5, **characterized in that** said measuring device (3) comprises a plurality of light sensors (32) optically coupled to each platelike body (31).

8. Apparatus according to any one of the preceding claims, **characterized in that** said measuring device (3) comprises a platelike body (31) arranged at an intermediate position between an illumination device (2A) of said illumination means and a first surface (150A) of a support (150), at which said object (100) is placed.

9. Apparatus according to any one of the preceding claims, **characterized in that** said measuring device (3) comprises a platelike body (31) arranged at an intermediate position between an illumination device (2B) of said illumination means and a second surface (150B) of a support (150) of said object (100), said object being placed at a first surface (150A) of said support opposite said second surface (150B), said support being made of optically transparent material.

10. Apparatus according to any one of the preceding claims, **characterized in that** said measuring device (3) comprises an electronic signal processing unit (33) operatively coupled to said at least a light sensor (32), said electronic signal processing unit being configured to receive and process said detection signals (S_{D}) and provide measurement signals (S_{M}) indicative of the light radiation received by said object (100).

11. Apparatus according to any one of the preceding claims, **characterized in that** it comprises image acquisition means (4) configured to acquire one or more images of said object, when illuminated by said illumination means.

12. Apparatus according to claim 11, **characterized in that** it comprises data processing means (7) configured to process the images acquired by said image acquisition means (4) and provide detection data (DS) indicative of the presence of surface defects on said object (100).

13. An object inspection station **characterized in that** it comprises at least a detection apparatus (1) according to one or more of the preceding claims.
